# EUROPÄISCHE PATENTSCHRIFT

(11) **EP 0 402 635 B1**
(45) Veröffentlichungstag und Bekanntmachung des Hinweises auf die Patenterteilung: **30.11.1994**
(21) Anmeldenummer: 90108972.2
(22) Anmeldetag: 12.05.1990
(51) Int. Cl.: H01R 11/28, H01M 2/30

(54) **Vorrichtung zum elektrischen Verbinden eines Batteriepols mit mindestens einem Anschlusskabel**
Device for the connection of a battery pole to at least one connecting cable
Dispositif de connexion d'un pôle de batterie avec au moins un câble de raccordement

(30) Priorität: 16.06.1989 DE 3919725
(43) Veröffentlichungstag der Anmeldung: 19.12.1990
(73) Patentinhaber: VB Autobatterie GmbH, D-30419 Hannover (DE)
(72) Erfinder: Streuer, Peter, D-3000 Hannover 61 (DE)
(74) Vertreter: Kaiser, Dieter Ralf, Dipl.-Ing.

(56) Entgegenhaltungen:
- EP-A- 0 251 970
- GB-A- 2 146 834
- GB-A- 2 169 130
- US-A- 4 317 870

## Beschreibung

Die Erfindung betrifft eine Vorrichtung zum elektrischen Verbinden eines Batteriepols mit mindestens einem Anschlußkabel, die aus einer vom Polkopf aus seitwärts gegen den Deckelrand sich erstreckenden flachen Metallplatte besteht und mindestens einen Anschlußpol aufweist.

Das Hauptanwendungsgebiet der Erfindung liegt bei Starterbatterien.

Der hohe Bedarf der Automobilindustrie an Starterbatterien für die Erstausrüstung veranlaßt nicht nur eine immer weitergehende Rationalisierung der Fertigungsmethoden beim Batteriehersteller selbst, sondern er macht zugleich die ständige Anpassung des Produkts an die Erfordernisse des übernehmenden Automobilwerkes notwendig. Dort ist man bestrebt, auf die weitgehende Einführung von Robotern für das Zusammenschweißen der Karosserieteile die automatische Montage auch der Einbauten, soweit diese einer maschinellen Handhabung zugänglich sind,folgen zu lassen. Zu diesen Einbauten zählt vor allem die Starterbatterie. Da sie außer zum Anwerfen des Motors auch zur Energieversorgung der gesamten Autoelektrik dient, was je nach Aufwand der Geräte Mehrfachanschlüsse bedingt, gestaltet sich die Verkabelung der Batterie mehr und mehr zu einem arbeitsintensiven Schritt.

Andererseits kann bei Ausführung dieser Arbeit durch Maschinen nicht der schonende Umgang wie bei einem geschulten Montagepersonal vorausgesetzt werden. Durch die mechanische Beanspruchung insbesondere der Endpole beim Anschließen der Verbindungskabel kann es zu Lockerungen des Pols und damit zu Undichtigkeiten im ohnehin empfindlichen Durchtrittsbereich im Batteriedeckel kommen.

Von Traktionsbatterien ist es bereits bekannt, gemäß EP-A 251 970 die Anschlußstelle bzw. eine Mehrzahl derselben von dem eigentlichen Pol und der Durchtrittstelle wegzuverlegen, indem der Polkopf in eine sich seitwärts ausdehnende und vom Batteriedeckel gestützte Metallplatte einmündet, die ihrerseits zu den drei polnahen Seiten des Batteriegehäuses hin Anschlußpole besitzt. Da diese bereits nahe am Zellenrand liegen und untereinander äquidistant sind, ermöglichen sie bei Verschaltungen im Batterieverbund sehr kurze elektrische Verbindungen durch Kabel oder Brücken einheitlicher Form und Länge.

Eine andere, aus der US-PS 4 701 386 bekannte Akkumulatorenbatterie weist für jede Polarität einen Doppelendpol, gebildet aus einem Hauptpol der üblichen Form und einem Nebenpol in Form einer Schraubhülse, auf, welcher in den Batteriedeckel eingebettet und unterhalb des Deckels mit dem Fuß des Hauptpoles auf einen Polschaft aufgeschweißt ist. Diese Polausführung erlaubt unterschiedliche Arten der Kabelbefestigung. Insbesondere ist der für eine Schraubverbindung eingerichtete Nebenpol, da er keine Poldurchführung aufweist, unanfällig gegen Korrosion durch kriechenden Säureelektrolyt.

An den Seiten eines Batteriegehäuses befindliche Polanschlüsse, die nur wenig oberhalb des Elektrolytspiegels liegen, sind zumeist Schraubpole (vgl. US-PS 4 478 919).

Der Erfindung liegt die Aufgabe zugrunde, eine Vorrichtung zum Anschließen von Verbindungskabeln an einen Batteriepol gemäß dem eingangs formulierten Gattungsbegriff anzugeben, die im Sinne der angedeuteten modernen Arbeitsweise "maschinengerecht" ist, gegebenenfalls auch Mehrfachanschlüsse gestattet und bei Zuleitungen unterschiedlicher Art eine falsche Zuleitung erkennt oder einen Falschanschluß verhindert.

Die Aufgabe wird erfindungsgemäß mittels einer Vorrichtung gelöst, wie sie im Patentsnspruch 1 definiert ist.

Der neue Anschlußpol ist danach im Grundsätzlichen ein Schraubpol, basierend jedoch auf einer an sich bekannten, dem Polschaft an seinem Ende angeschweißten oder angegossenen Metallplatte, welche sich vorzugsweise seitwärts zur nächstliegenden Ecke des Deckels erstreckt und den Schraubpol damit von der Zellendurchführung abrückt. Die Metallplatte liegt dem Kunstsstoffdeckel zumindest teilweise auf, soweit nicht im Einzugsbereich des Schraubpoles flache Einsenkungen die Deckeloberfläche bis zum Deckelrand hin durchziehen, so daß zwischen Metallplatte und Deckel Schlitze vorhanden sind, die der Aufnahme der Kabelschuhe dienen.

Aufgrund dieser Konstruktion ist die erfindungsgemäße Anschlußvorrichtung auch als Flachpol charakterisiert.

Statt eines Anschlußpoles können auf der Metallplatte mehrere Pole für Einzelanschlüsse vorhanden sein. Andererseits können mehrere Verbindungen in beliebiger Reihenfolge an einem Schraubpol hergestellt werden.

Der Anschlußpol gemäß der Erfindung besteht aus einer durch eine Bohrung in der Metallplatte hindurchgesteckten Metallschraube mit zugehöriger Schraubmutter, gewöhnlich einer Sechskantmutter, die unterhalb der Bohrung in einer Vertiefung des Deckels unverlierbar und verdrehungssicher gelagert ist.

Da die Metallplatte wegen ihrer Exzentrizität in bezug auf die Durchführung des Zellenpols beim Schrauben von Hand oder auf maschinelle Weise Drehmomenten ausgesetzt ist, ist es vorteilhaft, wenn die Platte in einer Vertiefung des Kunststoffdeckels entsprechend dem Plattenumriß eingelassen ist. Diese Maßnahme garantiert einen verdrehungssicheren Flachpol und verhindert ein Undichtwerden der Zellendurchführung.

Dem gleichen Zweck des Schutzes vor Verdrehungen kann auch eine Einfassung der Metallplatte durch Rippen dienen, die aus dem Kunststoffmaterial des Deckels ausgeformt sind.

Ein an dem Kopf der Polschraube angebrachter Knebel oder ein als Flügelschraube ausgeführter Verbindungspol stellen weitere Maßnahmen im Rahmen der Erfindung dar, die geeignet sind, sowohl die manuelle Befestigung der Verbindungskabel zu erleichtern als auch den Maschinenwerkzeugen eine Greif- und Orientierungshilfe zu geben.

Sollen mehrere oder nur bestimmte Zuleitungen mit dem Schraubpol kontaktiert werden, ist es von Vorteil, wenn die bereits erwähnten Einsenkungen im Einzugsbereich dieses bzw. der weiteren Verbindungspole auf dem Deckel so konstruiert sind, daß die zwischen Metallplatte und Deckeloberfläche erzeugten Einschubschlitze für die Kabelschuhe jeweils nur denjenigen mit dem gleichen Umriß aufnehmen. Auf diese Weise wird der Handhabungsautomat in den Stand versetzt, Falschanschlüsse zu vermeiden.

Die Kabelabgänge können sich an den Längsseiten ebenso wie an den Stirnseiten der Batterie befinden.

Mit Vorteil kann schließlich der gesamte Bereich des Deckels, über den sich die Metallplatte als Flachpol erstreckt, durch eine hochklappbare Abdeckplatte, die Teil einer Deckelhaube sein kann, geschützt werden.

Zum Hochklappen ist diese durch einen Trennschlitz sowie einen scharnierartig wirkenden Einschnitt in das Wandmaterial der Haube befähigt. In der Schließposition wird die Abdeckplatte durch Spritzgrate, die sich entlang dem Trennschlitz wechselseitig überlappen, festgehalten.

Fünf Figurendarstellungen verdeutlichen im folgenden die Vorrichtung gemäß der Erfindung.
Figur 1 zeigt einen negativen Schraubpol in seiner erfindungsgemäßen Anordnung im Schnitt A-A der Figur 2.
Figur 2 zeigt die gleiche Anordnung in einer Draufsicht.
Figur 3 zeigt einen von mehreren positiven Schraubpolen in erfindungsgemäßer Anordnung im Schnitt.
Figur 4 zeigt die zugrundeliegende mehrpolige Anordnung in einer Draufsicht.
Figur 5 zeigt eine Starterbatterie mit erfindungsgemäßen Ausstattungen in einer Draufsicht.

Nach den vorstehenden Ausführungen erklären sich die Figuren eigentlich von selbst.

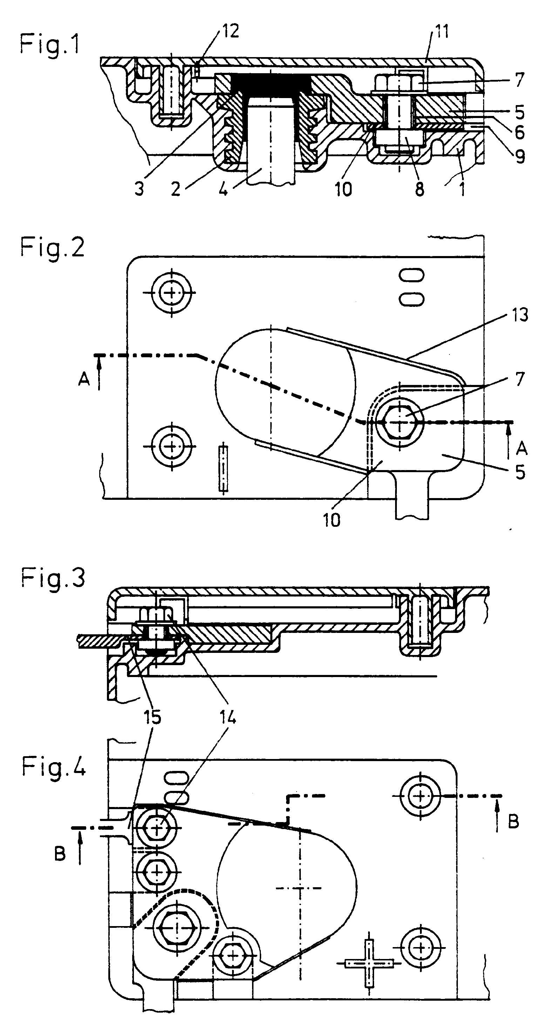

Der gegen die Durchführungsöffnung des Deckels 1 (Figur 1) mittels Bleibuchse 2 und Bleiverguß 3 abgedichtete Zellenpol 4 setzt sich oberhalb des Deckels in einer Metallplatte 5 in Richtung zur nächstliegenden Ecke des Deckels fort. In einer Bohrung 6 nimmt sie die Polschraube 7 auf, die von der Polmutter 8 gefaßt wird, welche unter der Bohrung in einer Vertiefung des Deckels unverlierbar und verdrehungssicher gehaltert ist. Durch eine Einsenkung der Deckeloberfläche im Einzugsbereich des Schraubpoles ist ein Schlitz 9 zur Aufnahme des Kabelschuhs 10 gebildet. Mit 11 ist eine Abdeckplatte bezeichnet, die um den scharnierartig wirkenden Einschnitt 12 in dem Wandmaterial hochklappbar ist.

Figur 2 läßt die verdrehungssichere Einbettung der Metallplatte 5 in eine angepaßte Deckelkontur 13 erkennen.

Aus Figur 3 sind alle wesentlichen Einzelheiten, wie anhand von Figur 1 beschrieben, für den positiven Schraubpol 14 ersichtlich, welcher zusammen mit dem daran befestigten Kabelschuh 15 in der Schnittlinie B-B der Figur 4 liegt.

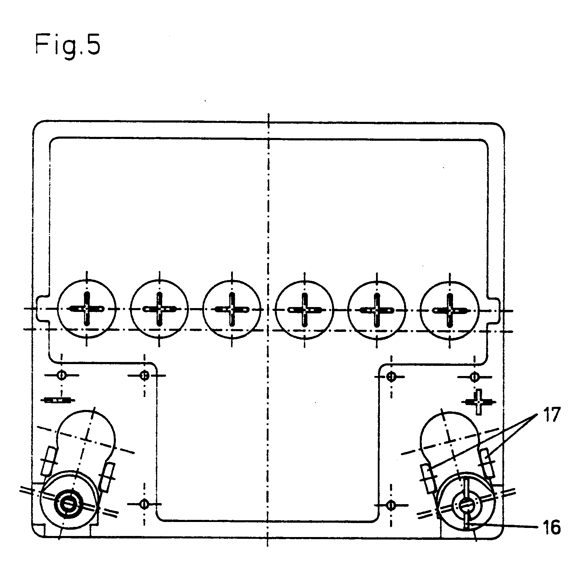

In der Draufsicht nach Figur 5 auf eine 6zellige Starterbatterie in erfindungsgemäßer Ausführung sind in Ergänzung zu den übrigen Figuren zwei weitere Merkmale der Erfindung, nämlich eine mit einem Knebel 16 versehene Polschraube und Rippen 17 zum verdrehungssicheren Fixieren des Flachpoles dargestellt.

## Patentansprüche

1. Vorrichtung zum elektrischen Verbinden eines Batteriepols mit mindestens einem Anschlußkabel, die aus einer vom Polkopf (4) aus seitwärts gegen den Deckelrand sich erstreckenden flachen Metallplatte (5) besteht und mindestens einen Anschlußpol aufweist, dadurch gekennzeichnet, daß der Anschlußpol eine durch eine Bohrung in der Metallplatte (5) hindurchsteckbare Schraube (7) ist, deren Mutter (8) in einer unterhalb der Bohrung befindlichen Vertiefung des Deckels (1) unverlierbar und verdrehungssicher gelagert ist, und daß im Durchführungsbereich der Schraube durch eine flache, bis zum Deckelrand verlaufende Einsenkung der Deckeloberfläche ein Schlitz (9) zwischen Metallplatte und darunterliegenden Deckel gebildet ist, welcher den Kabelschuh (10) des Anschlußkabels aufnimmt.

2. Vorrichtung nach Anspruch 1, dadurch gekennzeichnet, daß die Metallplatte zur Sicherheit gegen Verdrehen in eine ihrem Umriß entsprechende Vertiefung (13) des Kunststoffdeckels eingelassen ist.

3. Vorrichtung nach Anspruch 1, dadurch gekennzeichnet, daß die Metallplatte zur Sicherheit gegen Verdrehen an gegenüberliegenden Seiten von aus dem Kunststoffmaterial des Deckels ausgeformten Rippen (17) eingefaßt ist.

4. Vorrichtung nach einem der Ansprüche 1 bis 3, dadurch gekennzeichnet, daß zur Verhinderung einer Vertauschung von Anschlußkabeln die Einsenkung der Deckeloberfläche eine Kontur besitzt, die mit der Kontur des Kabelschuhs am vorgesehenen Anschlußkabel korreliert.

5. Vorrichtung nach einem der Ansprüche 1 bis 4, dadurch gekennzeichnet, daß der Kopf der Polschraube mit einem Knebel (16) versehen oder die Polschraube als Flügelschraube ausgebildet ist.

## Claims

1. A device for the electrical connection of a battery pole to at least one connection cable, which device comprises a flat metal plate (5) extending laterally from the pole head (4) towards the edge of the cover, and has at least one connection pole, characterised in that the connection pole is a bolt (7) which is insertable through a bore in the metal plate (5) and whose nut (8) is mounted in a non-losable and non-rotatable manner in a depression of the cover (1) located below the bore, and that a slot (9), accommodating the cable shoe (10) of the connection cable, is formed, between the metal plate and the cover located therebelow, in the lead-in region of the bolt by a shallow recess which is located in the surface of the cover and which extends up to the edge of the cover.

2. A device as claimed in claim 1, characterised in that, for the purpose of securing the metal plate against turning, the metal plate is let into a depression (13) in the plastics cover corresponding to the outline of the metal plate.

3. A device as claimed in claim 1, characterised in that, for the purpose of securing the metal plate against turning, the metal plate is bordered on oppositely located sides by ribs (17) formed out of the plastics material of the cover.

4. A device as claimed in one of the claims 1 to 3, characterised in that, for the purpose of preventing interchange of connection cables, the recess in the surface of the cover has a contour which corresponds to the contour of the cable shoe on the connection cable provided.

5. A device as claimed in one of the claims 1 to 4, characterised in that the head of the pole bolt is provided with a tommy bar (16), or the pole bolt is in the form of a wing bolt.

## Revendications

1. Dispositif pour la connexion électrique d'un pôle de batterie avec au moins un câble de raccordement qui est constitué d'une plaque métallique plate (5) s'étendant depuis la borne polaire (4) vers le côté contre le bord de couvercle et qui présente au moins un pôle de raccordement, caractérisé en ce que le pôle de raccordement est constitué par une vis (7) traversant un perçage dans la plaque métallique (5) dont l'écrou (8) est logé dans un creux du couvercle (1) se trouvant en dessous du perçage de façon à ne pas être perdu et à être assuré contre une rotation, et en ce qu'elle est formée dans la zone de passage de la vis par un affaissement plat s'étendant jusqu'au bord de couvercle de la surface de couvercle une fente (9) entre la plaque métallique et le couvercle se trouvant en dessous qui reçoit la cosse de câble (10) du câble de raccordement.

2. Dispositif selon la revendication 1, caractérisé en ce que la plaque métallique, pour l'assurer contre une rotation, est insérée dans un creux (13) correspondant à son contour du couvercle en matière plastique.

3. Dispositif selon la revendication 1, caractérisé en ce que la plaque métallique, pour l'assurer contre une rotation, est bordée aux côtés opposés par des nervures (17) formées dans la matière plastique du couvercle.

4. Dispositif selon l'une des revendications 1 à 3, caractérisé en ce que, pour empêcher un échange de câbles de raccordement, l'affaissement de la surface de couvercle possède un contour qui correspond au contour de la cosse de câble au câble de raccordement prévu.

5. Dispositif selon l'une des revendications 1 à 4, caractérisé en ce que la tête de la vis de pôle est pourvue d'un garrot (16) ou que la vis de pôle est réalisée sous forme de vis à oreilles.
